# EUROPÄISCHE PATENTSCHRIFT

(11) **EP 1 074 174 B1**
(45) Veröffentlichungstag und Bekanntmachung des Hinweises auf die Patenterteilung: **09.06.2004**
(21) Anmeldenummer: 00115189.3
(22) Anmeldetag: 13.07.2000
(51) Int. Cl.: A01C 17/00

(54) **Zentrifugaldüngerstreuer**
Centrifugal fertiliser spreader
Epandeur centrifuge pour engrais

(30) Priorität: 28.07.1999 DE 19935526; 02.09.1999 DE 19941725
(43) Veröffentlichungstag der Anmeldung: 07.02.2001
(73) Patentinhaber: Amazonen-Werke H. Dreyer GmbH & Co. KG, 49205 Hasbergen (DE)
(72) Erfinder: Dreyer, Heinz, Dipl.-Ing. Dr., 49205 Hasbergen (DE); Dreyer, Justus, Dipl.-Ing., 49205 Hasbergen (DE)

(56) Entgegenhaltungen:
- EP-A- 0 269 829
- EP-A- 0 537 621
- WO-A-98/31209
- DE-A- 3 439 590
- DE-A- 3 718 663
- DE-A- 4 417 549

## Beschreibung

Die Erfindung betrifft einen Zentrifugaldüngerstreuer gemäß des Oberbegriffes des Patentanspruches 1.

Derartige Zentrifugaldüngerstreuer sind z.B. aus DE-A-3718663 bekannt. Diese Zentrifugaldüngerstreuer sind entweder als Dreipunktanbaumaschinen zum Anbau an die Dreipunktkupplung eines Ackerschleppers oder als gezogene, ein eigenes Fahrwerk aufweisende Großflächenstreuer ausgebildet. Von diesen Düngerstreuern wird das Material mittels angetriebener Schleuderscheiben, die Wurfschaufeln aufweisen, aufweisenden Streuwerken in Breitverteilung auf der Bodenoberfläche verteilt. Auf Flächen, die Fahrspurvertiefungen oder Querspuren etc. aufweisen, denen das Fahrwerk oder der Ackerschlepper folgt, führt der gesamte Zentrifugaldüngerstreuers mit dem Streuwerk Querschwankungen aus, so dass sich negativ auswirkende Streubildveränderungen (auf der einen Seite Düngeranhäufungen, auf der anderen Seite Düngerreduzierungen) ergeben. Dieses ergibt sich daraus, dass das Streuwerk nicht parallel zur Bodenoberfläche ausgerichtet ist.

Der Erfindung liegt die Aufgabe zugrunde, einen Zentrifugaldüngerstreuer vorzuschlagen, bei dem diese negativen Streubildveränderungen, insbesondere Düngeranhäufungen bei Querschwankungen um in Fahrtrichtung verlaufende Achsen, vermieden werden.

Diese Aufgabe wird erfindungsgemäß durch die kennzeichnenden Merkmale des Anspruches 1 gelöst. Hierdurch wird es ermöglicht, dass das Streuwerk parallel zur Bodenoberfläche ausgerichtet ist. Dieses gewährleistet auch in Hanglagen eine Parallellage des Streuwerkes auf der zu bestreuenden Fläche. Diese Mittel können auch dazu eingesetzt werden, falls sich doch das Streuwerk durch Schwingungen aufschaukeln sollte, diesen Schwingungen entgegenzuwirken, so dass sie quasi als Dämpfungselemente ausgebildet sind. In bevorzugter Weise ist vorgesehen, dass zumindest das Streuwerk zumindest um eine in Fahrtrichtung verlaufende Pendel- und/oder Schwenkachse am Rahmen, vorzugsweise pendelnd aufgehängt ist. Hierdurch wird das Streuwerk von den übrigen Teilen des Zentrifugaldüngerstreuers und dem Fahrwerk, welches von dem Fahrwerk eines gezogenen Düngerstreuers oder von dem Fahrwerk des den Düngerstreuer tragenden Schleppers gebildet wird, entkoppelt. Aufgrund der Entkopplung des Streuwerkes durch die pendelnde Aufhängung wird eine sehr ruhige Lage des Streuwerkes zur Bodenoberfläche erreicht. Das Streuwerk folgt nicht zwangsläufig den schwankenden Bewegungen des Zentrifugaldüngerstreuers.

In einer bevorzugten Ausführung ist vorgesehen, dass die Pendel- und/oder Schwenkachse auf Höhe der Schleuderscheiben verläuft.

Um eine gleichmäßige Düngerzufuhr über die Dosierorgane zu den Schleuderscheiben des Streuwerkes zu erreichen, ohne dass sich eine Veränderung bzw. Verlagerung des Aufgabepunktes ergibt, kann in einer bevorzugten Ausführung vorgesehen sein, dass die Dosierorgane gemeinsam mit dem Streuwerk pendelnd aufgehängt sind, und dass den Dosierorganen das Material aus dem Vorratsbehälter zuführbar ist.

Um immer einen gleichmäßigen Nachfluß des Materials zu den Schleuderscheiben zu gewährleisten, ist vorgesehen, daß den Dosierorganen eine, ein kleines Aufnahmevolumen aufweisende Vorratsvorrichtung zugeordnet ist, der aus dem Vorratsbehälter mittels geeigneter Mittel das Material zuführbar ist.

Um sicherzustellen, daß ausreichend Material den Vorratsvorrichtungen, die den Dosierorganen zugeordnet sind, sicherzustellen, ist vorgesehen, daß Sensormittel vorhanden sind, mittels denen die Mittel, die das Material aus dem Vorratsbehälter den Vorratsvorrichtungen zuleiten, die die zugeführte Materialmenge bestimmen, steuer- und / oder regelbar sind.

Um eine optimale Ausrichtung des Streuwerkes zur zu bestreuenden Oberfläche auch unter schwierigen Einsatzverhältnissen zu gewährleisten, ist in einer bevorzugten Ausgestaltung der Erfindung vorgesehen, daß Sensormittel zur Erfassung der zu bestreuenden Oberfläche vorgesehen sind, daß aufgrund der über die zu bestreuenden Oberfläche erfaßten Daten Einstellmittel ansteuerbar sind, die eine parallele Lage oder eine gemittelte parallele Lage des Streuwerkes zur bestreuenden Oberfläche gewährleisten.

Um in jedem Falle eine parallele Lage des Streuwerkes zur bestreuenden Fläche zu gewährleisten, ist in einer Ausführungsvariante vorgesehen, daß im Abstand vor dem den Zentrifugaldüngerstreuer tragenden Fahrwerk eine Vorrichtung zur Erfassung des Fahrweges angeordnet ist, und daß aufgrund der über den Fahrweg erfaßten Daten die Mittel, die die parallele Lage des Streuwerkes zur bestreuenden Fläche gewährleisten, angesteuert und betätigt werden.

Diese Sensormittel können als Abstandssensoren, wie beispielsweise Ultraschallsensoren, ausgebildet sein.

Die Sensormittel können die zu bestreuende Oberfläche durch "Abschwenken" abtasten.

Auch ist es möglich, daß die Sensormittel als Laserstrahlen aussendende Sensoren ausgebildet sind, daß der Laserstrahl die zu bestreuende Oberfläche in hin- und herschwenkender Weise abtastet. Hierbei kann es auch möglich sein, daß die Sensormittel oder der Laserstrahl rotieren, und daß nur die ermittelten Daten des von dem Düngerstreuer zu bestreuenden Bodenoberflächenbereiches ausgewertet und zur Steuerung der Ausrichtung des Streuwerkes herangezogen werden, während die Daten des übrigen Winkelbereiches unberücksichtigt bleiben.

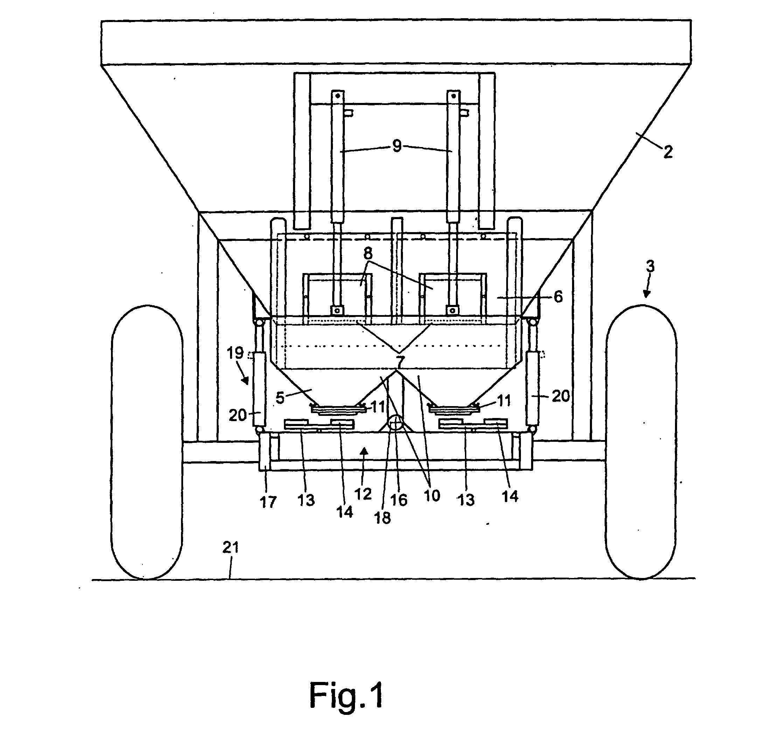

Weitere Einzelheiten der Erfindung sind den übrigen Unteransprüchen, der Beispielsbeschreibung und den Zeichnungen zu entnehmen. Hierbei zeigen
- Fig.1: den als Großflächendüngerstreuer ausgebildeten Zentrifugaldüngerstreuer in der Ansicht von hinten und in Prinzipdarstellung,

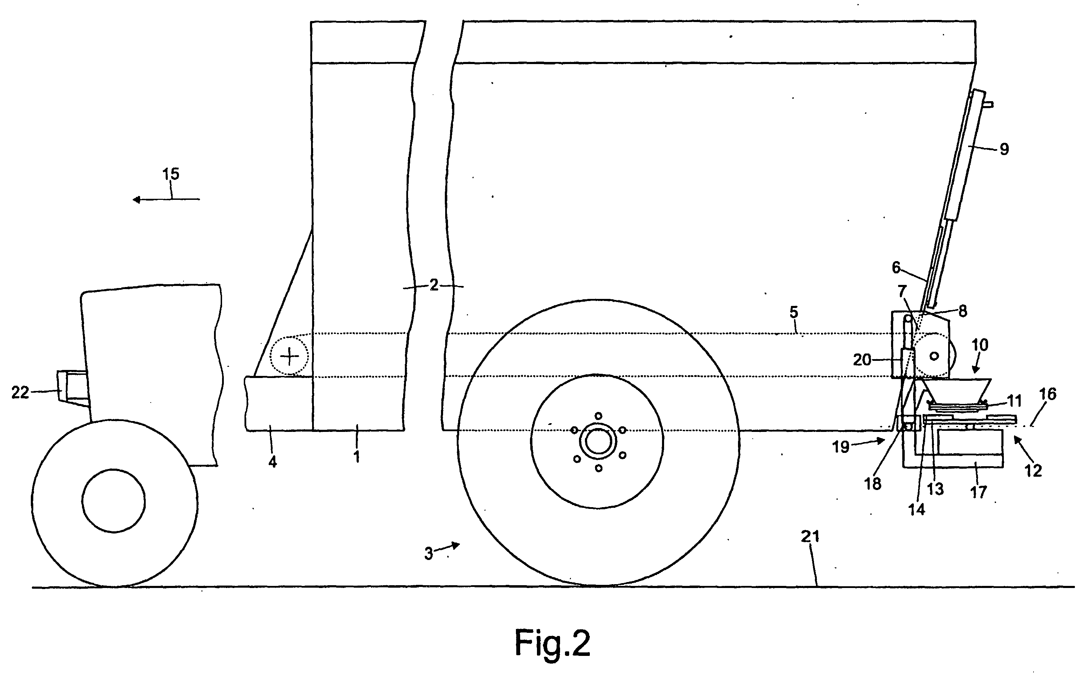

- Fig.2: den Großflächendüngerstreuer in Seitenansicht und in Prinzipdarstellung.

Der als Großflächendüngerstreuer ausgebildete Zentrifugaldüngerstreuer weist den Rahmen 1, den Vorratsbehälter 2, das Fahrwerk 3 und die Deichsel 4 auf. Im unteren Bereich des Vorratsbehälters 2 ist das mittels einer motorischen Antriebseinrichtung angetriebene Förderband 5 angeordnet. In der Behälterrückwand 6 sind im unteren Bereich die Auslauföffnungen 7 angeordnet, die über Schieber 8 in ihrer Öffnungsweite mittels der Einstellelemente 9 einstellbar sind. Unter dem hinteren Ende des Förderbandes 5 ist die Vorratsvorrichtung 10 mit dem Dosierorgan 11 angeordnet. Dem Dosierorgan 11 ist das Streuwerk 12, welches die Schleuderscheiben 13, auf denen Wurfschaufeln 14 angeordnet sind, zugeordnet. Die Schleuderscheiben 13 werden mittels eines motorischen Antriebes rotierend angetrieben. Über das Förderband 5 und den mittels der Schieber 8 einstellbaren Auslauföffnungen 7 wird der Vorratsvorrichtung 10, in bevorzugter Weise über Sensorelemente gesteuert, die erforderliche Materialmenge zugeführt, die über die Dosierorgane 11 den Schleuderscheiben 13 in einstellbaren Mengen zugeführt wird. Die über das Förderband 5 und mittels der Schieber 8 einstellbaren Auslauföffnungen 7 der Vorratsvorrichtung 10 zugeführte Materialmenge ist auf die Ausbringmenge abgestimmt bzw. wird über die Sensorelemente und einer geeigneten Regeleinrichtung entsprechend gesteuert bzw. geregelt.

Das Streuwerk 12 ist um die in Fahrtrichtung 15 verlaufende als Pendel- und/oder Schwenkachse 16 ausgebildete Achse am Rahmen 1 pendelnd beweglich bzw. bewegbar aufgehängt. Hierzu ist zwischen dem Tragrahmen 17 des Streuwerkes 12 und dem Rahmen 1 das die Pendel- und/oder Schwenkachse 16 aufweisende Pendelgelenk 18 der Pendelaufhängung 19 angeordnet.

Aufgrund dieser Pendelaufhängung 19 ist das Streuwerk 12 von den Schwankbewegungen des Rahmens 1 und des Fahrwerks 3 des Düngerstreuers entkoppelt. Hierdurch kann das Streuwerk 12 parallel zur Bodenoberfläche sich ausrichten bzw. ausgerichtet werden. Die Pendel- und/oder Schwenkachse 16 verläuft auf Höhe der Schleuderscheiben 13.

Es ist auch möglich, zusätzlich die Vorratsvorrichtung 10 mit der Dosiereinrichtung 11 an dem Tragrahmen 17 des Streuwerks 12 und nicht am Rahmen 1 anzuordnen, so daß das Dosierorgan 11 die gleichen Pendel- und Schwenkbewegungen wie das Streuwerk 12 gegenüber dem Rahmen 1 ausführen kann.

Die Vorratsvorrichtung 10 mit dem Dosierorgan 11 weist ein kleines Aufnahmevolumen auf. Dieser Vorratsvorrichtung 10 wird, wie vor erwähnt, mittels geeigneter Mittel das Material in den entsprechend erforderlichen Mengen zugeführt. Zwischen dem Rahmen 1 des Zentrifugaldüngerstreuers und dem Tragrahmen 17 des Streuwerkes 12 sind die Mittel 20 angeordnet, mittels denen eine zumindest annähernde Parallellage des Streuwerkes 12 zur bestreuende Fläche unabhängig von den Bewegungen des Rahmens 1, der sich über das Fahrwerk 3 auf dem Boden 21 abstützt, gewährleistet und erreichbar ist. Diese Mittel 20 können als Stoßdämpfer oder aktive Dämpfungsmittel oder auch als Aktoren ausgebildet sein, die von einer Regeleinrichtung entsprechend angesteuert werden. Es können mehrere dieser Mittel verschiedener Bauart und Wirkungsweise in Kombination vorgesehen sein.

An dem Zentrifugaldüngerstreuer oder an dem den Zentrifugaldüngerstreuer ziehenden Ackerschleppers ist eine Vorrichtung 22 zur Erfassung der zu bestreuenden Bodenoberfläche 21 und/oder des Fahrweges angeordnet. Diese Vorrichtung 22 erfaßt mittels geeigneter Sensoren den Fahrweg und liefert diese Daten an eine elektronische Auswerteeinrichtung. Die Auswerteeinrichtung ist mit einer Steuerungs- und Regeleinrichtung gekoppelt, die in geeigneter Weise die Aktoren 20, die zwischen dem Tragrahmen 17 des Streuwerkes 12 und dem Rahmen 1 angeordnet sind, ansteuern, um so die Parallellage des Streuwerkes 12 zur bestreuenden Fläche zu gewährleisten.

Die Sensoren 22 können als Abstandssensoren, wie beispielsweise Ultraschallsensoren ausgebildet sein. Die Sensoren 22 können die zu bestreuende Oberfläche 21 durch "Abschwenken" abtasten. Auch ist es möglich, daß die Sensormittel 22 als Laserstrahlen aussendende Sensoren ausgebildet sind, wobei der Laserstrahl die zu bestreuende Oberfläche 21 in hin- und herschwenkender Weise oder rotierender Weise abtastet. Bei einem rotierenden Laserstrahl werden nur die Daten über den zu bestreuenden Bereich der Oberfläche 21 zur Auswertung und Steuerung der Parallellage des Streuwerkes 12 herangezogen.

## Patentansprüche

1. Zentrifugaldüngerstreuer mit einem Rahmen, Vorratsbehälter, Dosierorgan, einem zumindest eine rotierend angetriebene Schleuderscheibe aufweisenden Streuwerk, **dadurch gekennzeichnet, dass** zumindest das Streuwerk um eine zumindest annähernd in Fahrtrichtung verlaufende Achse (16) beweglich bzw. bewegbar am Rahmen aufgehängt ist, dass zwischen dem Rahmen (1) und dem Streuwerk (12) von einer Regeleinrichtung ansteuerbare Mittel (20) angeordnet sind, mittels denen eine zumindest annähernde Parallellage des Streuwerkes (12) zur bestreuenden Fläche (21) unabhängig von den Bewegungen des Rahmens (1), der sich über ein Fahrwerk (3) auf dem Boden (21) abstützt, gewährleistet und / oder erreichbar ist.

2. Zentrifugaldüngerstreuer nach Anspruch 1, **dadurch gekennzeichnet, dass** zumindest das Streuwerk (12) zumindest um eine in Fahrtrichtung (15) verlaufende Pendel- und/oder Schwenkachse (16) am Rahmen (1), vorzugsweise pendelnd aufgehängt ist.

3. Zentrifugaldüngerstreuer nach einem oder mehreren der vorstehenden Ansprüche, **dadurch gekennzeichnet, dass** die Pendelund / oder Schwenkachsen (16) auf Höhe der Schleuderscheiben (13) verlaufen.

4. Zentrifugaldüngerstreuer nach Anspruch 1, **dadurch gekennzeichnet, dass** die Dosierorgane (11) gemeinsam mit dem Streuwerk (12) um eine in Fahrtrichtung (15) verlaufende Achse (16) pendelnd aufgehängt sind, und dass den Dosierorganen (11) das Material aus dem Vorratsbehälter (2) zuführbar ist.

5. Zentrifugaldüngerstreuer nach einem oder mehreren der vorstehenden Ansprüche, **dadurch gekennzeichnet, dass** den Dosierorganen (11) eine, ein kleines Aufnahmevolumen aufweisende Vorratsvorrichtung (10) zugeordnet ist, der aus dem Vorratsbehälter (2) mittels geeigneter Mittel (5, 7, 8) das Material zuführbar ist.

6. Zentrifugaldüngerstreuer nach einem oder mehreren der vorstehenden Ansprüche, **dadurch gekennzeichnet, dass** Sensormittel vorhanden sind, mittels denen die Mittel (5, 7, 8), die das Material aus dem Vorratsbehälter (2) den Vorratsvorrichtungen (10) zuleiten, die die zugeführte Materialmenge bestimmen, steuer- und / oder regelbar sind.

7. Zentrifugaldüngerstreuer nach Anspruch 1, **dadurch gekennzeichnet, dass** Sensormittel (22) zur Erfassung der zu bestreuenden Oberfläche (21) vorgesehen sind, dass aufgrund der über die zu bestreuenden Oberfläche (21) erfassten Daten Einstellmittel ansteuerbar sind, die eine parallele Lage oder eine gemittelte parallele Lage des Streuwerkes (12) zur bestreuenden Oberfläche (21) gewährleisten.

8. Zentrifugaldüngerstreuer nach einem oder mehreren der vorstehenden Ansprüche, **dadurch gekennzeichnet, dass** im Abstand vor dem den Zentrifugaldüngerstreuer tragenden Fahrwerk (3) eine Sensormittel aufweisende Vorrichtung (22) zur Erfassung des Fahrweges angeordnet ist, und dass aufgrund der über den Fahrweg erfassten Daten die Mittel, die die parallele Lage des Streuwerkes (12) zur bestreuenden Fläche (21) gewährleisten, angesteuert werden.

9. Zentrifugaldüngerstreuer nach einem oder mehreren der vorstehenden Ansprüche, **dadurch gekennzeichnet, dass** die Sensormittel (22) als Abstandssensoren, wie beispielsweise Ultraschallsensoren, ausgebildet sind.

10. Zentrifugaldüngerstreuer nach einem oder mehreren der vorstehenden Ansprüche, **dadurch gekennzeichnet, dass** die Sensormittel (22) die zu bestreuenden Oberfläche (21) durch "Abschwenken" abtasten.

11. Zentrifugaldüngerstreuer nach einem oder mehreren der vorstehenden Ansprüche, **dadurch gekennzeichnet, dass** die Sensormittel (22) als Laserstrahlen aussendende Sensoren ausgebildet sind, dass der Laserstrahl die zu bestreuende Oberfläche (21) in hin- und herschwenkender Weise abtastet.

## Claims

1. Centrifugal fertiliser broadcaster having a frame, hopper, dosing member and a broadcasting mechanism, which has at least one rotary driven centrifugal disc, **characterised in that** at least the broadcasting mechanism is suspended on the frame so as to be mobile or respectively displaceable about an axis (16), which extends at least approximately in the direction of travel, **in that** means (20), which are actuatable by a regulating device, are disposed between the frame (1) and the broadcasting mechanism (12), by means of which means an almost approximately parallel position of the broadcasting mechanism (12) relative to the area (21) to be broadcast over is guaranteed and/or is achievable irrespective of the movements of the frame (1), which is supported on the ground (21) via a framework (3).

2. Centrifugal fertiliser broadcaster according to claim 1, **characterised in that** at least the broadcasting mechanism (12) is suspended on the frame (1), preferably so as to oscillate, at least about an oscillating and/or pivotal axis (16), which extends in the direction of travel (15).

3. Centrifugal fertiliser broadcaster according to one or more of the preceding claims, **characterised in that** the oscillating and/or pivotal axes (16) extend at the level of the centrifugal discs.

4. Centrifugal fertiliser broadcaster according to claim 1, **characterised in that** the dosing members together with the broadcasting mechanism (12) are suspended so as to oscillate about an axis (16), which extends in the direction of travel (15), and **in that** the material from the hopper (2) is suppliable to the dosing members (11).

5. Centrifugal fertiliser broadcaster according to one or more of the preceding claims, **characterised in that** a storage apparatus (10), which has a small receiving volume, is associated with the dosing members (11), the material being suppliable from the hopper (2) to said storage apparatus (2) by means of suitable means (5, 7, 8).

6. Centrifugal fertiliser broadcaster according to one or more of the preceding claims, **characterised in that** sensor means are available, by means of which the means (5, 7, 8), which conduct the material out of the hopper (2) to the storage apparatuses (10), which determine the amount of material supplied, are controllable and/or regulatable.

7. Centrifugal fertiliser broadcaster according to claim 1, **characterised in that** sensor means (22) are provided for detecting the surface (21) to be broadcast over, **in that** adjusting means are actuatable on account of the data detected over the surface (21) to be broadcast over, which adjusting means guarantee a parallel position or an averaged parallel position of the broadcasting mechanism (12) relative to the surface (21) to be broadcast over.

8. Centrifugal fertiliser broadcaster according to one or more of the preceding claims, **characterised in that** an apparatus (22), including a sensor means, for detecting the path is disposed at a distance in front of the framework (3) carrying the centrifugal fertiliser broadcaster, and **in that** the means, which guarantee the parallel position of the broadcasting mechanism (12) relative to the area (21) to be broadcast over, are actuated on account of the data detected over the path.

9. Centrifugal fertiliser broadcaster according to one or more of the preceding claims, **characterised in that** the sensor means (22) are in the form of distance sensors, such as, for example, ultrasound sensors.

10. Centrifugal fertiliser broadcaster according to one or more of the preceding claims, **characterised in that** the sensor means (22) scan the surface (22) to be broadcast over by means of "pivoting round".

11. Centrifugal fertiliser broadcaster according to one or more of the preceding claims, **characterised in that** the sensor means (22) are in the form of sensors which transmit laser beams, **in that** the laser beam scans the surface (21) to be broadcast over by pivoting backwards and forwards.

## Revendications

1. Epandeur centrifuge pour engrais comportant un châssis, un réservoir de stockage, un organe de dosage, un dispositif d'épandage présentant au moins un disque centrifuge entraîné de façon rotative,
**caractérisé en ce qu'**
au moins le dispositif d'épandage est suspendu de façon mobile ou susceptible de l'être au niveau du châssis (1), autour d'un axe (16) s'étendant au moins approximativement dans la direction de déplacement, entre le châssis (1) et le dispositif d'épandage (12) sont disposés des moyens (20) pouvant être commandés par un dispositif de régulation, qui permettent de garantir et/ou d'obtenir une position au moins approximativement parallèle du dispositif d'épandage (12) par rapport à la surface à traiter (21), indépendamment des mouvements du châssis (1), qui s'appuie sur le sol (21) par le biais d'une structure au sol (3).

2. Epandeur centrifuge pour engrais selon la revendication 1,
**caractérisé en ce qu'**
au moins le dispositif d'épandage (12) est suspendu de préférence de façon oscillante au niveau du châssis (1), au moins autour d'un axe d'oscillation et/ou de pivotement (16) s'étendant dans la direction de déplacement (15).

3. Epandeur centrifuge pour engrais selon l'une ou plusieurs des revendications précédentes,
**caractérisé en ce que**
les axes d'oscillation et/ou de pivotement (16) s'étendent à hauteur des disques centrifuges (13).

4. Epandeur centrifuge pour engrais selon la revendication 1,
**caractérisé en ce que**
les organes de dosage (11) sont suspendus conjointement avec le dispositif d'épandage (12) autour d'un axe (16) s'étendant dans la direction de déplacement (15), et la matière provenant du réservoir de stockage (2) peut être fournie aux organes de dosage (11).

5. Epandeur centrifuge pour engrais selon l'une ou plusieurs des revendications précédentes,
**caractérisé en ce que**
les organes de dosage (11) sont associés à un dispositif de stockage (10) présentant un faible volume de stockage, qui peut recevoir, à l'aide de moyens appropriés (5, 7, 8) la matière provenant du réservoir de stockage (2).

6. Epandeur centrifuge pour engrais selon l'une ou plusieurs des revendications précédentes,
**caractérisé en ce qu'**
il est prévu des moyens de détection, qui permettent de commander et/ou de régler les moyens (5, 7, 8) qui conduisent la matière hors du réservoir de stockage (2) vers les dispositifs de stockage (10), qui déterminent la quantité de matière fournie.

7. Epandeur centrifuge pour engrais selon la revendication 1,
**caractérisé en ce que**
des moyens de détection (22) permettent d'enregistrer la surface à traiter (21), à l'aide des données enregistrées relatives à la surface à traiter (21), des moyens de réglage peuvent être commandés, afin de garantir une position parallèle ou une position approximativement parallèle du dispositif d'épandage (12) par rapport à la surface à traiter (21).

8. Epandeur centrifuge pour engrais selon l'une ou plusieurs des revendications précédentes,
**caractérisé en ce qu'**
à distance devant la structure au sol (3) portant l'épandeur centrifuge pour engrais est disposé un dispositif (22) présentant un moyen de détection permettant d'enregistrer l'itinéraire, et à l'aide des données enregistrées relatives à l'itinéraire, les moyens qui garantissent la position parallèle du dispositif d'épandage (12) par rapport à la surface à traiter (21) peuvent être commandés.

9. Epandeur centrifuge pour engrais selon l'une ou plusieurs des revendications précédentes,
**caractérisé en ce que**
les moyens de détection (22) sont configurés sous la forme de capteurs de distance, tels que par exemple des capteurs à ultrasons.

10. Epandeur centrifuge pour engrais selon l'une ou plusieurs des revendications précédentes,
**caractérisé en ce que**
les moyens de détection (22) balayent la surface à traiter (21) par « pivotement ».

11. Epandeur centrifuge pour engrais selon l'une ou plusieurs des revendications précédentes,
**caractérisé en ce que**
les moyens de détection (22) sont configurés sous la forme de capteurs émetteurs de rayons laser, et le rayon laser balaye la surface à traiter (21) selon un mouvement de va-et-vient.
